# EUROPEAN PATENT APPLICATION

(11) **EP 0 563 455 A1**
(43) Date of publication of application: **06.10.1993**
(21) Application number: 92200918.8
(22) Date of filing: 31.03.1992
(51) Int. Cl.: B01J 2/30, A23P 1/06

(54) **Particulate solid products containing a lump forming inhibitor**

(71) Applicant: Purac Biochem B.V., NL-4200 AA Gorinchem (NL)
(72) Inventor: van Velthuijsen, John, NL-4205 JS Gorinchem (NL); van Krieken, Jan, NL-4207 NA Gorinchem (NL)
(74) Representative: de Bruijn, Leendert C.

(57) **Abstract**

The invention relates to lumpy becoming solid particulate products, which contain an effective amount of a calcium lactate having a crystal water content of ≦ 27 wt.% for preventing lump formation and improving the free-flowing properties of the product. The calcium lactate is preferably calcium lactate monohydrate, calcium lactate anhydrate or a mixture consisting of both the monohydrate and the anhydrate. The treated lumpy becoming products may be food products like bake mixes or specific substances like lactic acid, sodium lactate etc. The process for producing the above-defined products is generally based on the following steps:
- dehydrating - if necessary - the lumpy becoming product to a free water content of less than 6 wt.%;
- comminuting - if necessary - the dehydrated product to a particle size of less than about 5 mm, preferably less than about 1 mm; and
- mixing the particulate product with a calcium lactate having a crystal water content of ≦ 27 wt.%.

## Description

### Introduction

The invention relates to lumpy becoming solid particulate products which contain a specific substance for preventing the products from lumping and for improving their free-flowing properties. The lumpy becoming solid particulate products encompass all kinds of products which become lumpy after exposure to a storage period under normal atmosphere as such or in a sealed bag.

On account of the maintenance and improvement of the free-flowing properties the lumpy becoming products may simply be usable in, for instance, dispensing and metering operations.

Other advantages of the invention will be apparent from the following description.

### Prior art

It is generally known that a large number of products like powdered sucrose or powdery sodium lactate become lumpy if this type of products is stored in a container or kept at a location where the product is in contact with air. The lumping process may start by adsorbing moisture from the atmosphere resulting in a partial liquefaction of the surfaces of the crystal. This partial liquefaction results in a saturated solution between crystals, which under the influence of for instance a change in temperature or in other environmental conditions will crystallize. On account of these crystallisation phenomena bridges are gradually formed which connect the crystals under the formation of firm lumps or blocks.

If the above-described crystallisation phenomena and the resulting lump formation occur at relatively considerable degree the handling properties of the products in question become insufficient for manufacturers and consumers for using the products for the purpose intended.

One of prior art solutions for the above problem is based on a drying step of the product to a complete anhydrous stage and a subsequent sealing step of the anhydrous product in an airtight package. However, for using the product the airtight package has to be opened, whereafter the product is processed, normally under normal atmosphere. During this processing step the product may adsorb moisture from the atmosphere resulting in a lumpy product having inadequate handling properties.

On the other hand there are products like lactic acid crystals which form lumps by intermolecular reactions in the absence of atmospheric moisture i.e. storing this kind of products in an airtight package will result in lumpy products.

For solving the problem of lump formation of products many methods have been proposed. One of the prior art methods is based on the application of a substance which is more hygroscopic than the lump forming or coagulating product. Such a substance is mixed with the coagulating product in order to absorb the moisture present yet in the coagulating or lumpy becoming product. Another prior art method comprises the use of a lubricant which is mixed with the coagulating product. Examples of additives of the above types are corn starch, maltodextrins, calcium phosphate, sodium phosphate and silicates etc. which have been used in some industrial fields.

Further US-A 5,051,272 is directed to improving the storage stability of articles and devices such as absorbable surgical sutures, clips, staples, implants, prostheses and the like, fabricated from polymers which are susceptable to hydrolytic degradation, notably polymers and copolymers of glycolic acid, the cyclic dimer of glycolic acid, lactic acid, the cyclic dimer of lactic acid and related monomers. This improvement is obtained by applying a storage stabilizing amount of a mixture comprising
a) at least one water soluble hygroscopic polyhydroxy compound and/or ester thereof e.g. glycerol, monoacetin, diacetin, and the like and
b) at least one compound having the general formula

   R-(OH)C(H)-(CH₂)ₙ-COOR'

   wherein R is hydrogen or methyl, R' is an alkali metal or an alkaline earth metal and n is 0 or 1 and hydrates thereof to the polymeric article as storing stabilising agent.

An example of such a storage stabilising agent is a mixture of glycerol and calcium lactate, preferably calcium lactate pentahydrate.

### Aim of the invention

The aim of the invention is to find an additive which prevents coagulating products to become lumpy. Such an additive should be a product which is being marketed on a large scale and has a low cost price. Another requirement to be met is that the use of the additive is authorized under the Food Sanitation Law. Furthermore the additive should not only be harmless but must also contribute to the food value of a lumpy becoming nutrient to be treated.

In respect of the above stated requirements it is pointed at one of the favourable and widely used prior art additives i.e. silicates. However, silicates have several drawbacks like
- silicates are non-natural ingredients;
- silicates give difficulties in handling;
- silicates are not water soluble;
- the amount of silicates, acceptable in food products is rather restricted, i.e. generally 1-2 % w/w maximum; and
- silicates are rather expensive.

### General statement of the invention

Surprisingly it has been found that calcium lactate having a crystal water content of ≦ 27 wt.% does meet the above-mentioned requirements for the additive desired. Such a calcium lactate does not have the drawbacks of the widely used silicates.

### Detailed description of the invention

The above mentioned term "calcium lactate having a crystal water content of ≦ 27 wt.%" encompasses calcium lactate anhydrate, calcium lactate monohydrate, calcium lactate trihydrate, calcium lactate pentahydrate and mixtures of these salts. The preferred salt is calcium lactate monohydrate (C₃H₅O₃)Ca.1H₂O which use is authorized under the Food Sanitation Law as food additive.

Calcium lactate monohydrate has a high solubility in water, gives almost neutral aqueous solutions, is odourless and, moreover, alsmost tasteless in dilute solutions.

Except calcium lactate monohydrate the compound calcium lactate anhydrate is also very suitable according to the invention. The same counts for mixtures of calcium lactate monohydrate and calcium lactate anhydrate in a range from 1-99 wt.%, preferably 1-50 wt.% of calcium lactate anhydrate. In some cases calcium lactate trihydrate and calcium lactate pentahydrate can be used as well.

The calcium lactate products indicated above are marketed products, manufactured by fermentation by PURAC biochem B.V., The Netherlands. More in particular
- calcium lactate pentahydrate (22-27 wt.% of water) is marketed under the tradename "Puracal-PP";
- calcium lactate trihydrate (17-20 wt.% of water) is marketed under the tradename "Puracal-TC";
- calcium lactate monohydrate (5-8 wt.% of water) is marketed under the tradename "Puracal-MP"; and
- calcium lactate anhydrate (< 1 wt.% of water) is produced by drying calcium lactate monohydrate for 24 hours at 120°C.

As indicated above the calcium lactate monohydrate is preferred as this salt is quite useful for the prevention of lumping of all kinds of coagulating products like potassium lactate, sodium lactate, lactic acid, lactide (3,6-dimethyl-1,4-dioxane-2,5-dione), sucrose etc.. If used in a sufficient amount this monohydrate salt improves the free-flowing properties of these products on account of its lubricating action or sometimes desiccating action. More in particular the following data are illustrated for these products.
(a) In case of crystalline L(+) lactic acid the amount of the additive calcium lactate monohydrate should be 5 wt.% or more, as below 5 wt.% the mixture is rather sticky. Above 5 wt.% the mixture is free flowing, which property is maintained for a great deal during storage. The same results are achieved with calcium lactate anhydrate.
(b) In case of sodium lactate the following procedure may be followed.
   Sodium lactate (60 wt.% aqueous solution) is evaporated to a concentration of about 99 wt.%. The hot viscous mass is cooled to a temperature of 20-40°C and then grounded and simultaneously mixed with calcium lactate monohydrate. The amount of calcium lactate monohydrate in the mixture should be at least 1 wt.%, based on the mixture. An amount of 20 wt.% of calcium lactate monohydrate is not desirable in respect of the condition to keep the sodium lactate content of the mixture as high as possible.
   The same kind of results are achieved with calcium lactate anhydrate, calcium lactate trihydrate and calcium lactate pentahydrate.
(c) In case of potassium lactate being a very hygroscopic substance, the following procedure may be followed.
   Potassium lactate (60 wt.% aqueous solution) is evaporated to a concentration of about 99 wt.%. The non-viscous mass is cooled to a temperature of 20-40°C. Then the mass is grounded and at the same time mixed with calcium lactate monohydrate. For obtaining a free flowing mixture the calcium lactate monohydrate content should be at least 10 wt.%. A content of 20 wt.% or more of the calcium lactate monohydrate is not desirable in respect of the condition to keep the potassium lactate content of the mixture as high as possible.
   The same kind of results are achieved with calcium lactate anhydrate.
(d) In case of lactide the latter having a relatively high free acid content (50-100 meq/kg is mixed with calcium lactate monohydrate. The obtained mixture should contain a calcium lactate monohydrate content of ≧ 5 wt.% for obtaining free flowing properties, whereas a calcium lactate monohydrate content of ≧ 15 wt.% is not desirable in order to keep the lactide content in the mixture as high as possible.
   The same kind of results are achieved with calcium lactate anhydrate.

Further to the above mentioned treated products a wide range of food products may be treated in accordance with the invention. Examples of these food products are bake mixes, chili powders, cream substitutes, egg powders, flavours, gravy mixes, powdered cheese, salt and salt substitutes, seasonings, soya lecithin, baking powders, cocoa mixes, desert mixes, grated cheese, powdered milk, meat seasonings, soup mixes, spices, sugar substitutes, food stabilisers and powdered vending machine products.

As appears from the above the calcium lactate content in the product to be treated may vary between wide limits, preferably between 1-20 wt.%, based on the product.

Further the invention relates to a process for improving the free-flowing properties of lumpy becoming products which process comprises the steps of
- dehydrating - if necessary - the lumpy becoming product to a free water content of less than 6 wt.%, preferably less than 2 wt.%;
- comminuting - if necessary - the dehydrated product to a particle size of less than 5 mm, preferably less than 1 mm; and
- mixing the obtained particulate product with a calcium lactate having a crystal water content of ≦ 27 wt.%.

The above-indicated process according to the invention may be performed with or in devices generally known in the art. For instance the dehydration may be carried out in a rotary evaporator. The comminuting step may simply be carried out with - if necessary - a hammering device and the mixing step with a mixer-blender.

The invention is illustrated by means of the following examples which may not be interpreted in a restrictive way.

### Example 1

450 g of solid L(+) lactic acid (water content: < 1 wt.%) obtained by crystallisation from a highly concentrated aqueous solution was mixed with 50 g of calcium lactate monohydrate (water content: 6.7 wt.%) in a rotary evaporator for 10-15 minutes. The obtained mixture had free-flowing properties. Even after three months the mixture stored in an airtight bag had not lumped.

### Example 2

1700 g of sodium lactate (60 wt.% aqueous solution) was concentrated to about 99 wt.% by means of a rotary evaporator. The very viscous sodium lactate was poured onto a metal scale and cooled to 20-40°C under vacuo. After the cooling step the sodium lactate was broken in the air by means of a hammer to particles having a size of 1-5 cm. 190 g of the obtained glassy sodium lactate was mixed with 22 g of calcium lactate monohydrate (water content: 6.7 wt.%) and grounded for a few minutes to a powder in a mixer-blender having a beaker with a volume of 1 liter. The obtained product was free-flowing. After a storage period of three months in an airtight polyethylene jar the product was still free-flowing.

### Example 3

500 g of potassium lactate (60 wt.% aqueous solution) was concentrated to about 99% by means of a rotary evaporator. The very viscous potassium lactate was poured onto a metal scale and cooled to 20-40°C under vacuo. After the cooling step the potassium lactate was broken in the air by means of a hammer to particles having a size of 1-5 cm. 270 g of the obtained solid but sticky potassium lactate was mixed with 30 g of calcium lactate monohydrate (water content: 6.7 wt.%) and grounded for a few minutes to small particles in a mixer-blender having a beaker with a volume of 1 liter. The obtained product was free-flowing. After a storage period of three months in an airtight bag the product had not lumped.

### Example 4

225 g of crystalline lactide having a free acid content of about 100 meq/kg was mixed for several minutes with 25 g of calcium lactate monohydrate (water content: 6.7 wt.%) in a rotary evaporator. The obtained mixture was free flowing. After a storage period of 3 months in an airtight bag the mixture was still free-flowing.

### Example 5

For determining the above-mentioned upper crystal water limit of the calcium lactate in the case of solid lactic acid the following tests were carried out.

The used lumpy becoming product was lactic acid (water content: about 0.5 wt.%). The lactic acid was mixed with the below-mentioned calcium lactate materials for 5 minutes in a rotary evaporator:
a) 450 g of lactic acid crystals and 50 g of calcium lactate anhydrate (water content: 0.59 wt.%);
b) 450 g of lactic acid crystals and 50 g of calcium lactate monohydrate (RR 8348) (water content: 6.7 wt.%);
c) 450 g of lactic acid crystals and 50 g of calcium lactate trihydrate (RA 1630) (water content: 17.5 wt.%); and
d) 450 g of lactic acid crystals and 50 g of calcium lactate pentahydrate (CA 8459) (water content: 24 wt.%).
e) 225 g of lactic acid crystals and 25 g of calcium lactate (water content: 167 wt.%).
f) 225 g of lactic acid crystals and 25 g of calcium lactate (water content: 14.0 wt.%).
g) 225 g of lactic acid crystals and 25 g of calcium lactate (water content: 11.2 wt.%).

After the mixing step the products (a) and (b) were very loose products (free flowing) whereas product (c) was quite sticky and product (d) very sticky (comparable to the pure lactic acid product). In this respect it is remarked that during the mixing of product (d) a temperature drop occurred pointing at a dissolution of the lactic acid in the crystal water of the calcium lactate pentahydrate). The product (e) was slightly lumpy and product (f) was scarcely lumpy. The obtained last product (g) appeared to be a perfectly loose product.

From this test it may be concluded that in case of solid lactic acid the crystal water content of the calcium lactate material should be < 14 wt.% for obtaining products having free-flowing properties.

### Example 6

For comparing the calcium lactate additive according to the invention with the widely used free flowing conditioner sodium silicate aluminate (Zeolex 424, E554) the following tests were carried out.

The used lumpy becoming product was powdered sucrose. The powdered sugar was mixed for 5 minutes with the below-mentioned percentages of Zeolex 424 on the one hand and calcium lactate monohydrate (water content: 8 wt.%) on the other hand in a Turbula-mixer. The following samples were prepared:

| Zeolex 424 | Calcium lactate monohydrate |
|---|---|
| 0 wt.% | 0 wt.% |
| 0.25 wt.% | - |
| 0.50 wt.% | 0.50 wt.% |
| 0.75 wt.% | - |
| 1.00 wt.% | 1.00 wt.% |
| 2.00 wt.% | 2.00 wt.% |
| - | 3.00 wt.% |
| - | 4.00 wt.% |

For obtaining distinguishing results the obtained mixtures were put two days in a room having a steamy atmosphere. After this test the results were as follows.
- The higher the content of Zeolex 424 the better the free-flowing properties of the powdered sugars.
- The higher the content of calcium lactate monohydrate the better the free-flowing properties of the powdered sugar.
- The samples containing no free-flowing conditioner showed many lumps.
- The samples containing an amount of the free-flowing conditioner Zeolex 424 or calcium lactate monohydrate showed less lumps, compared to the samples containing no free-flowing conditioner.
- With respect to a comparison of the free-flowing properties of the samples containing Zeolex 424 on the one hand and calcium lactate monohydrate on the other hand the following can be remarked:
   (a) the 0.50 wt.% calcium lactate monohydrate sample corresponds more or less to the 0.25 wt.% Zeolex 424 sample;
   (b) the 1.00 wt.% calcium lactate monohydrate sample corresponds more or less to the 0.50 wt.% Zeolex 424 sample;
   (c) the 2.00 wt.% calcium lactate monohydrate sample corresponds more or less to the 1 wt.% Zeolex 424 sample;
   (d) the 4.00 wt.% calcium lactate monohydrate sample corresponds more or less to the 2 wt.% Zeolex 424 sample.

Summarizing it can be stated that in comparison to Zeolex 424 a double amount of calcium lactate monohydrate is necessary for achieving the same kind of free flowing properties. However, calcium lactate monohydrate does not have the drawbacks bound to Zeolex 424.

### Example 7

1579 g of sodium lactate (60 wt.% aqueous solution) was concentrated to about 99 wt.% by means of a rotary evaporator. The very viscous sodium lactate was poured into a metal scale and cooled to 20-40°C under vacuo. After the cooling step the sodium lactate was broken by means of a hammer into particles having a size of 1-5 cm. 226 g of the obtained glassy sodium lactate was mixed with 2.3 g of calcium lactate monohydrate (water content: 6.7 wt.%) and grounded for a few minutes to a powder in a mixer-blender having a beaker with a volume of 1 liter. The obtained product was free flowing. After a storage period of one month in an airtight polyethylene jar the product was still free flowing.

### Example 8

401 g of potassium lactate (60 wt.% aqueous solution) and 404 g of sodium lactate (60 wt.% aqueous solution) were mixed and concentrated to about 99 wt.% by means of a rotary evaporator. The very viscous mixture was poured into a metal scale and cooled to 20-40°C under vacuo. After the cooling step the mixture of potassium lactate and sodium lactate was broken by means of a hammer into particles having a size of 1-5 cm. 204 g of the obtained glassy mixture of potassium lactate and sodium lactate was mixed with 22 g of calcium lactate pentahydrate (water content: 24 wt.%) and grounded for a few minutes to a powder in a mixer-blender having a beaker with a volume of 1 liter. The obtained product was free flowing.

### Example 9

803 g of sodium lactate (60 wt.% aqueous solution) was concentrated to about 99 wt.% by means of a rotary evaporator. The very viscous sodium lactate was poured into a metal scale and cooled to 20-40°C under vacuo. After the cooling step the sodium lactate was broken by means of a hammer into particles having a size of 1-5 cm. 219 g of the obtained glassy sodium lactate was mixed with 24 g of calcium lactate pentahydrate (water content: 24 wt.%) and grounded for a few minutes to a powder in a mixer-blender having a beaker with a volume of 1 liter. The obtained product was free flowing.

### Example 10

309 g of potassium lactate (60 wt.% aqueous solution) and 103 g of sodium lactate (60 wt.% aqueous solution) were mixed and concentrated to about 99 wt.% by means of a rotary evaporator. The very viscous mixture was poured into a metal scale and cooled to 20-40°C under vacuo. After the cooling step the mixture of potassium lactate and sodium lactate was broken by means of a hammer into particles having a size of 1-5 cm. 231 g of the obtained glassy mixture of potassium lactate and sodium lactate was mixed with 25 g of calcium lactate (water content: 11.2 wt.%) and grounded for a few minutes to a powder in a mixer-blender having a beaker with a volume of 1 liter. The obtained product was free flowing.

## Claims

1. Lumpy becoming solid particulate product, characterized by an effective amount of a calcium lactate having a crystal water content of ≦ 27 wt.% for preventing lump formation and improving the free-flowing properties of the product.

2. Product according to Claim 1, characterized in that the used calcium lactate is selected from the group consisting of calcium lactate anhydrate, calcium lactate monohydrate, calcium lactate trihydrate and calcium lactate pentahydrate.

3. Product according to Claim 1 or 2, characterized in that the used calcium lactate is calcium lactate monohydrate.

4. Product according to Claim 1 or 2, characterized in that the used calcium lactate is a mixture consisting of two or more calcium lactates selected from the group consisting of calcium lactate anhydrate, calcium lactate monohydrate, calcium lactate trihydrate and calcium lactate pentahydrate.

5. Product according to Claim 4, characterized in that the used calcium lactate is a mixture consisting of calcium lactate anhydrate and calcium lactate monohydrate.

6. Product according to any of the Claims 1-5, characterized in that the calcium lactate is present in an amount of 1-20 wt.% based on the product.

7. Product according to any of the Claims 1-6, characterized in that the product is a food product.

8. Product according to any of the Claims 1-6, characterized in that the product is lactic acid.

9. Product according to any of the Claims 1-6, characterized in that the product is sodium lactate.

10. Product according to any of the Claims 1-6, characterized in that the product is potassium lactate.

11. Product according to any of the Claims 1-6, characterized in that the product is a mixture consisting of potassium lactate and sodium lactate.

12. Product according to any of the Claims 1-6, characterized in that the product is lactide.

13. Process for improving the free-flowing properties of lumpy becoming products, characterized by the steps of
- dehydrating - if necessary - the lumpy becoming product to a free water content of less than 6 wt.%;
- comminuting - if necessary - the dehydrated product to a particle size of less than 5 mm; and
- mixing the particulate product with a calcium lactate having a crystal water content of ≦ 27 wt.%.

14. Process according to Claim 13, characterized in that the dehydration step is carried out until the product has a free-water content of less than 2 wt.%.

15. Process according to Claims 13 or 14, characterized in that the used calcium lactate is calcium lactate monohydrate, calcium lactate anhydrate, calcium lactate trihydrate and calcium lactate pentahydrate or a mixture consisting of two or more of said calcium lactates.

16. Process according to Claim 15, characterized in that the used calcium lactate is a mixture consisting of calcium lactate anhydrate and calcium lactate monohydrate.

17. Process according to any of Claims 13-16, characterized in that the particulate product is mixed with a calcium lactate in an amount of 1-20 wt.% based on the particulate product.
